# FASCICULE DE BREVET EUROPEEN

(11) **EP 0 785 025 B1**
(45) Date de publication et mention de la délivrance du brevet: **09.02.2000**
(21) Numéro de dépôt: 96810861.3
(22) Date de dépôt: 10.12.1996
(51) Int. Cl.: B02C 18/06, B02C 13/18, B02C 23/16

(54) **Machine à granuler**
Maschine zum Granulieren
Granulating machine

(30) Priorité: 19.01.1996 CH 14796
(43) Date de publication de la demande: 23.07.1997
(73) Titulaire: Frewitt Maschinenfabrik AG, 1763 Granges-Paccot (CH)
(72) Inventeur: Broillet, Michel, 1723 Marly (CH)
(74) Mandataire: AMMANN PATENTANWAELTE AG BERN

(56) Documents cités:
- DE-C- 847 413
- FR-A- 2 715 871
- GB-A- 2 272 500
- US-A- 4 425 841
- US-A- 4 605 173
- US-A- 5 282 579
- US-A- 5 330 113

## Description

La présente invention concerne une machine à granuler selon le préambule de la revendication 1.

Une telle machine est connue par exemple du brevet US-5,330,113. Le rotor de cette machine tourne sur des paliers abrités dans un carter de protection d'un renvoi par engrenages. Ce carter est agencé sous le rotor, ce dernier étant entraîné par un arbre d'entraînement latéral et par ledit renvoi à roues coniques montées sur l'arbre du rotor et sur l'arbre d'entraînement. La position axiale du rotor sur son arbre, c'est-à-dire le jeu entre le rotor et le tamis, peut être réglé par l'augmentation ou la diminution du nombre de rondelles disposées entre l'extrémité supérieure de l'arbre du rotor et le fond de l'alésage du rotor. Il est évident que tout changement de la position axiale du rotor nécessite le démontage du rotor de son arbre, ce qui, de surcroît, ne peut être effectué sans arrêter auparavant la machine.

Le brevet US-4 773 599 présente une machine à granuler avec un dispositif permettant de régler la position axiale du rotor et ainsi le jeu entre le rotor et le tamis. Le réglage est effectué à l'aide d'un disque accessible au-dessus du rotor et du tamis, ce disque, l'axe du rotor et les paliers du rotor placés au-dessus du rotor empêchant de travailler en ligne.

Un premier but de la présente invention est de pallier ces inconvénients. A cette fin, le rotor avec son arbre est déplaçable axialement par un dispositif de réglage agissant sur l'arbre du rotor au-dessous dudit rotor et dudit tamis. De préférence, ce dispositif de réglage agit sur le palier du rotor qui est déplaçable axialement.

Un autre inconvénient de la machine connue réside dans le fait que les roues coniques qui transmettent la rotation de l'arbre d'entraînement à l'arbre du rotor doivent se trouver dans un bain d'huile, ce qui nécessite une étanchéité à toute épreuve du carter dans lequel se trouvent les roues coniques, les paliers de l'arbre du rotor et de l'arbre d'entraînement. Or, les risques de fuite ne peuvent être éliminés totalement. Et il est aisé d'imaginer les dommages qu'engendrent des fuites d'huile notamment lorsque la machine est mise en oeuvre pour traiter des produits pharmaceutiques. Un autre but de la présente invention est donc d'éviter ces inconvénients. Ce but est atteint grâce à un entraînement du rotor à l'aide d'une courroie.

L'invention sera maintenant expliquée plus en détail à l'aide d'un exemple d'exécution représenté dans les dessins annexés.

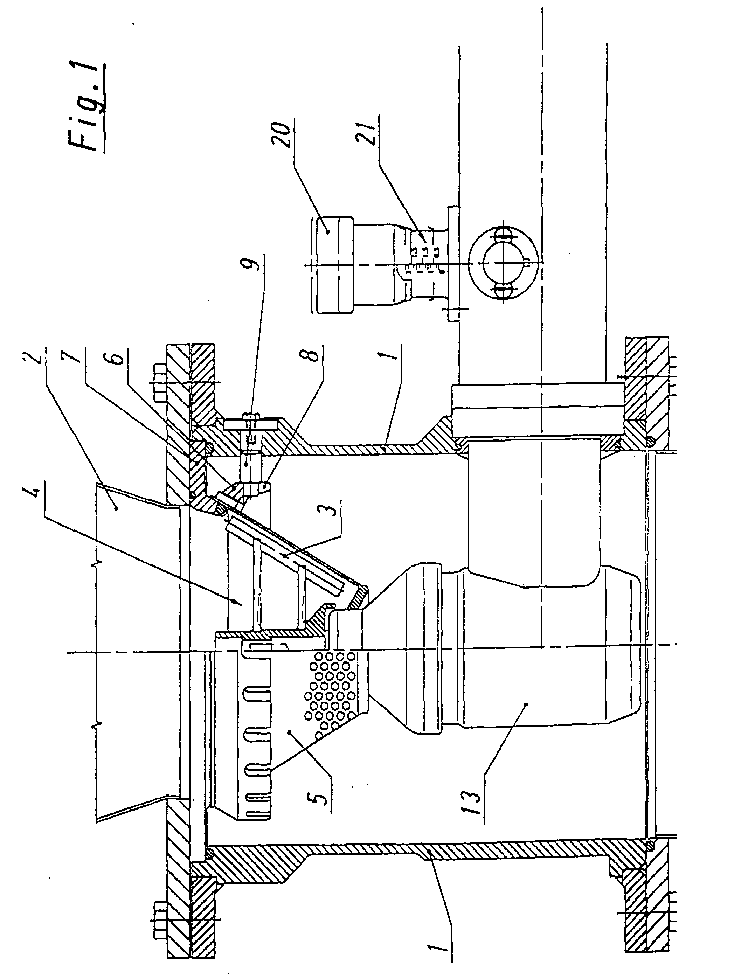

- La fig. 1: représente une vue, partiellement en coupe, de la machine,

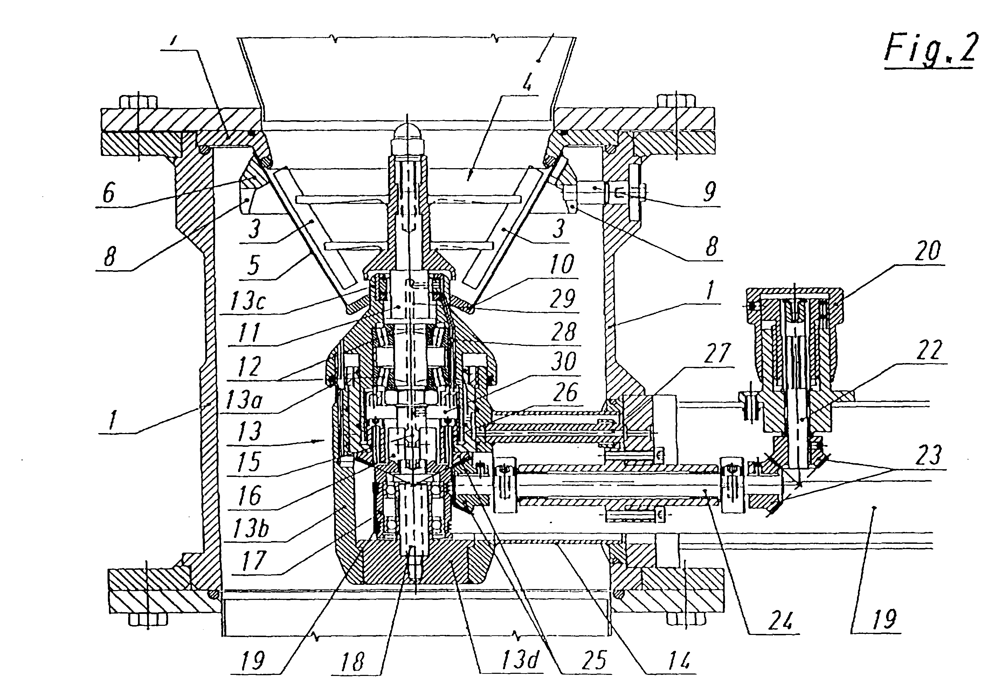

- la fig. 2: représente une coupe axiale de la machine,
- la fig. 3: représente une bague étalon, et
- la fig. 4: représente une variante.

La machine illustrée présente un bâti tubulaire 1 qui forme un canal vertical pour le passage des granulés après introduction dans un entonnoir 2 de la matière à granuler pressée par les ailes 3 d'un rotor 4 à travers un tamis tronconique 5. La matière granulée tombe dans ledit canal vertical, ce qui permet de travailler en ligne, c'est-à-dire que la matière passe par la machine selon une direction verticale et un même axe.

Le bord supérieur du tamis 5 repose sur une surface conique d'une bague étalon 6 contre laquelle le tamis est appuyé par une bague de serrage 7.

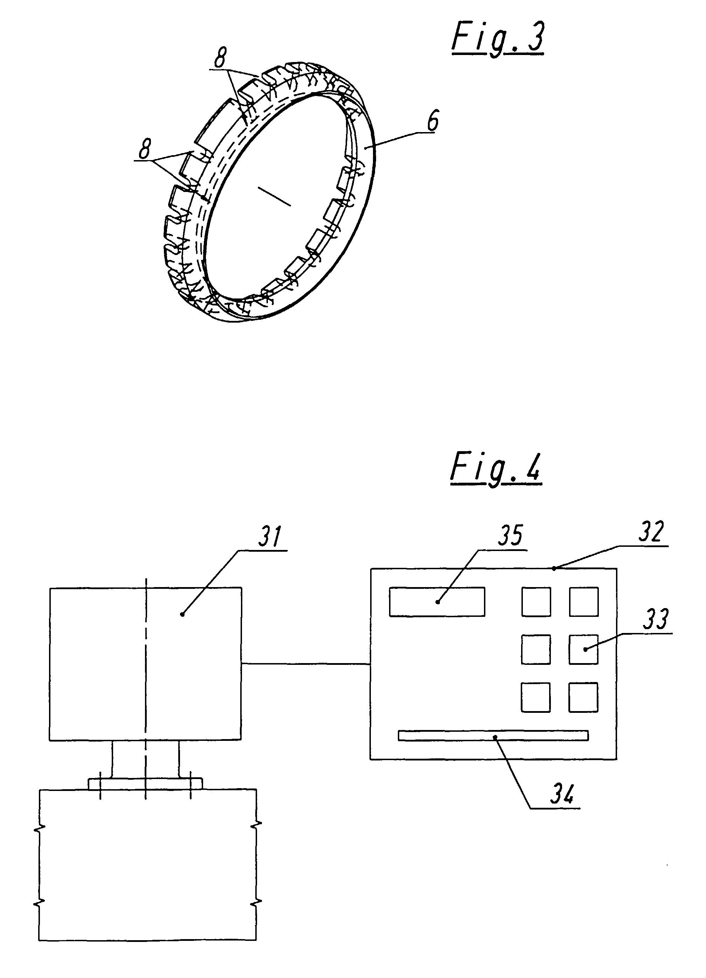

La bague étalon 6, qui présente trois séries d'encoches 8 de profondeurs différentes (Fig. 3), est supportée par trois chevilles 9 dont chacune s'engage dans l'une de ces encoches 8 de la série correspondante. La position verticale, ou positionnement en hauteur, de la bague étalon est par conséquent fonction de la profondeur des encoches 8. Il est ainsi possible de déterminer la position verticale du tamis par la position angulaire de la bague étalon 6, ce qui permet de compenser l'épaisseur du tamis 5, de sorte qu'indépendamment de celle-ci, la surface intérieure dudit tamis (c'est-à-dire celle située côté du canal) se trouve toujours dans la même position en hauteur.

L'extrémité inférieure du tamis 5 est soudée à une bride de guidage conique 10. Plusieurs joints d'étanchéité assurent l'étanchéité entre les différentes parties de la machine.

L'arbre 11 du rotor 4 tourne, selon l'exemple, sur deux paliers coniques à rouleaux 12 dans une partie supérieure 13a d'un carter 13. La partie inférieure 13b du carter est soudée à un tube de support 14 qui est fixé au bâti tubulaire 1. Le carter 13 présente un fond 13d soudé à sa partie inférieure 13b.

Une goupille transversale 15 agencée à l'extrémité inférieure de l'arbre 11 du rotor est en prise avec une fourche 16 d'une poulie 17 tournant sur un palier à billes autour d'un tourillon 18. La poulie 17 peut être entraînée en rotation par une courroie 19, elle-même entrainée par un moteur non-représenté. L'arbre du rotor et le rotor, libres en rotation, sont ainsi accouplés à la poulie 17, tout en étant déplaçables axialement grâce à l'accouplement réalisé par la goupille 15 et la fourche 16. Un collet 13c du carter s'engage avec peu de jeu dans la bride 10 du tamis 5.

Le déplacement axial de la partie supérieure 13a du carter avec les roulements 12, l'arbre 11 et le rotor 4 peut être commandé et contrôlé à l'aide d'un dispositif de réglage. Ce dispositif de réglage comporte un molette de réglage 20 associée à un vernier 21. La rotation de la molette 20 est transmise par un arbre 22, des roues coniques 23, un arbre de réglage 24 et des roues coniques 25 à une douille 26 présentant un filetage en prise avec un taraudage de la partie supérieure 13a du carter 13. Par la rotation de la douille 26, la partie supérieure 13a du carter 13 avec les roulements 12, l'arbre 11 du rotor et le rotor 4 peuvent être déplacés verticalement, même en cours de fonctionnement de la machine, aux fins de régler la distance ou espace entre le rotor 4, c'est-à-dire les bras 3 de celui-ci, et la surface intérieure du tamis 5. La position relative des bras 3 du rotor par rapport à la surface intérieure du tamis 5 est indiquée sur le vernier 21, étant donné que la molette 20 se déplaçe axialement lorsqu'elle est tournée pour régler la distance rotor - tamis. En d'autres termes, cette distance est indiquée et directement lue sur le vernier 21. De plus, comme le positionnement de la surface intérieure du tamis 5 demeure toujours le même, indépendamment de l'épaisseur du tamis, grâce, comme on l'a spécifié plus haut, à la position relative de la bague étalon 6 par rapport au tamis, le dispositif de réglage qui vient d'être décrit permet d'effectuer un réglage précis, cela sans toucher le tamis, ni autres éléments que la molette 20.

On comprend également que le réglage extérieur de la distance du rotor par rapport au tamis au moyen du dispositif de réglage de précision assure une reproductibilité parfaite des paramètres de réglage comme cela est exigé par l'industrie pharmaceutique pour la validation du procédé de fabrication.

Bien entendu, il est avantageux de prévoir deux dispositifs complémentaires (non représentés sur les dessins): d'abord, un dispositif de blocage du réglage effectué, afin d'éliminer des positions intermédiaires. Un tel blocage peut être obtenu, par exemple en prévoyant un mécanisme d'encliquetage. Ensuite, des butées limitant le positionnement inférieur du rotor, de sorte à empêcher, d'une part, tout contact entre ce dernier et le tamis et, d'autre part, la création de particules métalliques conséquente au frottement métal contre métal.

La machine comporte un système de refroidissement. De l'air de refroidissement peut être admis par un tube 27, un canal 28 et un alésage 29 de l'arbre 11 du rotor dans l'espace 30 et dans l'espace entourant l'accouplement 15, 16 et la poulie 17. Il est ainsi possible de maintenir la température des parties susceptibles de subir un échauffement à un niveau acceptable.

Outre les avantages et buts atteints déjà mentionnés, la machine présente les caractéristiques favorables suivantes: Du fait que le serrage du tamis 5 se fait depuis l'intérieur, la forme géométrique et la position du tamis sont parfaitement déterminées.

Le carter 13 avec son fond soudé 13d et le tube 14 soudé à la partie inférieure 13b du carter forment un ensemble absolument étanche, sans élément de fixation ou autres éléments qui pourraient se détacher, les deux seules liaisons entre éléments mécaniques mobiles étant disposées dans la partie supérieure, c'est-à-dire au-dessus du tamis 5. Cette construction permet d'écarter un double risque de contamination des granulés. En effet, ces derniers ne peuvent entrer en contact ni avec des résidus huileux ou graisseux ou autres particules et poussières, ni avec une quelconque pièce détachée qui pourrait se désolidariser.

Par le système de pinçage supérieur on obtient un centrage et une correction d'un éventuel faux-rond du tamis. La bride inférieure 10 du tamis augmente la rigidité tout en facilitant le centrage du tamis, et la pente de la bride vers l'extérieur permet un bon écoulement du produit contre la paroi du tamis. Il est possible d'empiler des tamis sans contact des paroi l'une contre l'autre. L'espace important subsistant entre le tamis et la paroi du bâti facilite l'enlèvement et le remplacement du/des tamis. La machine peut être nettoyée et démontée aisément, et être stérilisée en ligne.

Plusieurs variantes de la machine représentée sont possibles. On peut installer des buses de lavage. La forme et la grandeur des perforations du tamis peuvent être adapteés aux exigences. Les tamis 5 et la bague étalon 6 peuvent être pourvus de moyens de verrouillage, de sorte que le montage du tamis et de la bague étalon ne puisse se faire que dans la seule position correcte, tout erreur devenant impossible. On peut prévoir une sonde de température qui permet d'asservir le système, c'est-à-dire d'adapter la vitesse, ou d'arrêter la machine ou encore d'activer le dispositif de refroidissement selon les cas. Des moyens peuvent aussi être prévus pour limiter la course du rotor vers le bas dans le but d'éviter tout contact direct entre le rotor et le tamis.

La figure 4 représente schématiquement une variante. Un servo-moteur 31 est prévu au lieu de la molette de réglage 20 pour commander le dispositif de réglage décrit ci-devant. Le moteur 31 est commandé par une unité de commande électronique 32 qui peut comprendre des mémoires programmées et/ou programmables. A l'aide de touches 33 on peut choisir des programmes mémorisées ou introduire et mémoriser des données pour commander automatiquement la position du rotor. En plus, on peut introduire des disques par une entrée 34, des programmes étant lu de ces disques pour commander la position du rotor et/ou d'autres paramètres comme la vitesse du rotor. L'unité de commande peut aussi être muni d'une ou plusieurs affichages 35 qui permettent de verifier le ou les grandeurs commandées ou programmées.

## Revendications

1. Machine à granuler avec un tamis tronconique (5) dans lequel est disposé un rotor (4) monté sur un arbre (11) tournant dans au moins un palier et accouplé à un élément d'entraînement (19) latéral agencé au-dessous dudit tamis (5) et dudit rotor (4), la machine étant ainsi conçue pour travailler en ligne, caractérisée en ce que le rotor (4) avec son arbre (11) est déplaçable axialement par un dispositif de réglage (20 - 26) agissant sur l'arbre (11) du rotor (4) au-dessous dudit rotor et du tamis (5).

2. Machine selon la revendication 1, caractérisée en ce que le dispositif de réglage (20 - 26) agit sur le(s) palier(s) (12) du rotor (4).

3. Machine selon la revendication 1 ou 2, caractérisée en ce que le dispositif de réglage (20 - 26) comporte un arbre de réglage latéral (24) pouvant être actionné depuis l'extérieur et accouplé à une douille de réglage taraudée (26).

4. Machine selon l'une des revendications 1 à 3 caractérisée en ce que le dispositif de réglage comprend un vernier.

5. Machine selon l'une des revendications 1 à 4 caractérisée en ce que l'arbre du rotor (11) est relié à un arbre d'entraînement (16) coaxial par un accouplement (15, 16) permettant un déplacement axial relatif entre l'arbre d'entraînement (16) et l'arbre du rotor (11), un système de refroidissement (27 - 30) étant prévu pour l'arbre (11) du rotor, son palier (12), l'arbre d'entraînement et son palier qui sont disposés dans un carter (13) étanche.

6. Machine selon la revendication 5, caractérisée en ce que le carter (13) comporte à son extrémité supérieure une partie cylindrique (13c) et que le tamis (5) comporte une bride de guidage (10) qui entoure ladite partie cylindrique (13c) du carter (13).

7. Machine selon l'une des revendications 1 à 6, caractérisée en ce que le tamis (5) est posé contre une bague étalon (6) susceptible d'être montée dans des positions angulaires différentes, la position de la bague étalon (6) et du tamis (5) étant ainsi réglée en fonction de l'épaisseur du tamis.

8. Machine selon la revendication 7, caractérisée en ce que la bague étalon (6) comporte des séries d'encoches (8) de profondeurs différentes, la bague étalon (6) étant posée sur des chevilles (9) de support du bâti (1) de machine.

9. Machine selon l' une des revendications 1 à 8, caracterisée en ce que le tamis (5) est fixé à l'aide d'une bague de serrage (7) depuis l'interieur du tamis (5).

10. Machine selon l'une des revendications 1 à 9 caractérisée en ce que l'arbre d'entraînement (16) du rotor (4) est entraîné par une courroie (19).

11. Machine selon l'une des revendications 1 à 10, charactérisé par des moyens pour limiter la course du rotor (4) et pour ainsi éviter un contact direct entre le rotor (4) et le tamis (5).

12. Machine selon l'une des revendications 1 à 11, charactérisé par une commande programmée (31 - 35) et/ou programmable pour commander automatiquement la position du rotor et/ou d'autres paramètres.

## Patentansprüche

1. Granuliermaschine mit einem kegelstumpfförmigen Sieb (5), in welchem ein Rotor (4) angeordnet ist, der auf einer Welle (11) befestigt ist, welche in mindestens einem Lager läuft und mit einem seitlichen, unter dem Sieb (5) und dem Rotor (4) angeordneten Antriebselement (19) gekuppelt ist, wodurch die Maschine für den in-line-Betrieb geeignet ist, dadurch gekennzeichnet, dass der Rotor (4) mit seiner Welle (11) durch eine Einstellvorrichtung (20 - 26) axial verschiebbar ist, welche unter dem Rotor (4) und dem Sieb (5) auf die Rotorwelle (11) wirkt.

2. Maschine nach Anspruch 1, dadurch gekennzeichnet, dass die Einstellvorrichtung (20 - 26) auf das oder die Lager (12) des Rotors (4) wirkt.

3. Maschine nach Anspruch 1 oder 2, dadurch gekennzeichnet, dass die Einstellvorrichtung (20 - 26) eine seitliche Einstellwelle (24) aufweist, welche von aussen betätigbar und mit einer Einstellhülse (26) mit Innengewinde gekuppelt ist.

4. Maschine nach einem der Ansprüche 1 bis 3, dadurch gekennzeichnet, dass die Einstellvorrichtung einen Nonius aufweist.

5. Maschine nach einem der Ansprüche 1 bis 4, dadurch gekennzeichnet, dass die Rotorwelle (11) über eine Kupplung (15, 16) mit einer koaxialen Antriebswelle (16) verbunden ist, welche eine axiale Relativbewegung zwischen der Antriebswelle (16) und der Rotorwelle (11) ermöglicht, wobei ein Kühlsystem (27 - 30) für die Rotorwelle (11), deren Lager (12), die Antriebswelle und deren Lager vorgesehen ist, welche in einem dichten Gehäuse (13) angeordnet sind.

6. Maschine nach Anspruch 5, dadurch gekennzeichnet, dass das Gehäuse (13) am oberen Ende einen zylindrischen Teil (13c) aufweist, und dass das Sieb (5) einen Führungsflansch (10) aufweist, der diesen zylindrischen Teil (13c) des Gehäuses (13) umfasst.

7. Maschine nach einem der Ansprüche 1 bis 6, dadurch gekennzeichnet, dass das Sieb (5) auf einem Einstellring (6) aufliegt, der in verschiedenen Winkelstellungen montierbar ist, wobei die Lage des Einstellrings (6) und des Siebs (5) in Abhängigkeit von der Dicke des Siebs eingestellt wird.

8. Maschine nach Anspruch 7, dadurch gekennzeichnet, dass der Einstellring (6) Gruppen von Einschnitten (8) unterschiedlicher Tiefe aufweist, wobei der Einstellring (6) auf Auflagestiften (9) des Maschinengestells (1) aufliegt.

9. Maschine nach einem der Ansprüche 1 bis 8, dadurch gekennzeichnet, dass das Sieb (5) mittels einem Klemmring (7) von der Innenseite her befestigt ist.

10. Maschine nach einem der Ansprüche 1 bis 9, dadurch gekennzeichnet, dass die Antriebswelle (16) des Rotors (4) von einem Riemen (19) angetrieben wird.

11. Maschine nach einem der Ansprüche 1 bis 10, gekennzeichnet durch Mittel zur Begrenzung des Hubs des Rotors (4) und damit zur Vermeidung eines direkten Kontakts zwischen dem Rotor (4) und dem Sieb (5).

12. Maschine nach einem der Ansprüche 1 bis 11, gekennzeichnet durch eine programmierte und/oder programmierbare Steuerung (31 - 35) zur automatischen Steuerung der Rotorposition und/oder anderer Parameter.

## Claims

1. Granulating machine having a sieve (5) in the form of a truncated cone, in which a rotor (4) is disposed which is mounted on a shaft (11), the shaft rotating in at least one bearing and being coupled to a lateral driving element (19) which is arranged under the sieve (5) and the rotor (4), the machine thus being designed for in-line operation, characterised in that the rotor (4) including its shaft (11) is axially displaceable by an adjusting device (20 - 26) acting upon the shaft (11) of the rotor (4) underneath the rotor and the sieve (5).

2. Machine according to claim 1, characterised in that the adjusting device (20 - 26) acts upon the bearing(s) (12) of the rotor (4) .

3. Machine according to claim 1 or 2, characterised in that the adjusting device (20 - 26) comprises a lateral adjusting shaft (24) which is actuatable externally and coupled to a threaded adjusting bushing (26).

4. Machine according to one of claims 1 to 3, characterised in that the adjusting device comprises a vernier.

5. Machine according to one of claims 1 to 4, characterised in that the rotor shaft (11) is connected to a coaxial driving shaft (16) by a coupling (15, 16) allowing a relative axial displacement between the driving shaft (16) and the rotor shaft (11), a cooling system (27 - 30) being provided for the rotor shaft (11), its bearing (12), the driving shaft, and its bearing, which are disposed in a tight casing (13).

6. Machine according to claim 5, characterised in that the casing (13) comprises at its upper end a cylindrical portion (13c), and the sieve (5) comprises a guiding flange (10) which surrounds the cylindrical portion (13c) of the casing (13).

7. Machine according to one of claims 1 to 6, characterised in that the sieve (5) is placed on a adjusting ring (6) which is capable of being mounted in different angular positions, the position of the adjusting ring (6) and of the sieve (5) being adjusted in function of the thickness of the sieve.

8. Machine according to claim 7, characterised in that the adjusting ring (6) comprises series of incisions (8) of different depths, the adjusting ring (6) resting on supporting pins (9) of the machine frame (1).

9. Machine according to one of claims 1 to 8, characterised in that the sieve (5) is fastened from the inside of the sieve (5) by means of a clamping ring (7).

10. Machine according to one of claims 1 to 9, characterised in that the driving shaft (16) of the rotor (4) is driven by a belt (19).

11. Machine according to one of claims 1 to 10, characterised in that means are provided in order to limit the stroke of the rotor (4) and thus to prevent a direct contact between the rotor (4) and the sieve (5).

12. Machine according to one of claims 1 to 11, characterised in that a programmed and/or programmable control (31 - 35) is provided in order to automatically control the position of the rotor and/or other parameters.
